Europäisches Patentamt

European Patent Office

Office européen des brevets

(11) Publication number: **0 174 214**
**B1**

## (12) EUROPEAN PATENT SPECIFICATION

(45) Date of publication of patent specification: **17.05.89**

(21) Application number: **85306389.9**

(22) Date of filing: **09.09.85**

(51) Int. Cl.⁴: **B 65 H 7/12, B 65 H 5/14,
B 43 M 3/04, G 01 B 21/08**

(54) Apparatus for inserting sheets.

(30) Priority: **07.09.84 US 648391
07.09.84 US 648399**

(43) Date of publication of application:
**12.03.86 Bulletin 86/11**

(45) Publication of the grant of the patent:
**17.05.89 Bulletin 89/20**

(84) Designated Contracting States:
**CH DE FR GB LI SE**

(56) References cited:
**EP-A-0 072 670
WO-A-82/02037
US-A-3 885 780**

(73) Proprietor: **BELL & HOWELL COMPANY
6800 McCormick Road
Chicago Illinois 60651 (US)**

(72) Inventor: **Zemke, Edward H.**
**6100 W. Patterson
Chicago Illinois 60634 (US)**
Inventor: **Vandersyde, Gary L.**
**603 E. Bauer Road
Naperville Illinois (US)**
Inventor: **Rabindran, K. George**
**8900 Marmora
Morton Grove Illinois (US)**
Inventor: **Guenther, Kenneth L.**
**809 North Merrill Avenue
Park Ridge Illinois (US)**

(74) Representative: **Smith, Philip Antony et al
REDDIE & GROSE 16 Theobalds Road
London WC1X 8PL (GB)**

Courier Press, Leamington Spa, England.

## Description

The present invention relates to an insertion machine having a gripper arm for selective engagement and retrieval of articles from a station in timed relationship with the cycle of operation of the machine, the gripper arm being drivable in an oscillatory manner for the retrieval of the articles and having a pair of jaws for engaging the articles and an actuating means coupled by a linkage with one of said jaws to move that jaw towards and away from the other jaw for engagement and release of the articles.

One environment wherein the present invention finds application is the document handling art. In document handling it is often required to grip a document between two jaw-like members and then to transport the gripped document from a first position to a second position. United States Patent 2,325,455 to A. H. Williams, includes a discussion of a document handling operation of this type in the disclosure of an insertion machine. The Williams apparatus discloses a gripper arm which has both fixed and movable jaw members. In apparatus of this type the fixed jaw member is usually integral with the gripper arm while the movable jaw is selectively operated so that items, such as documents or inserts, can be engaged between and released from the two jaws.

Prior art gripper arms have traditionally been mounted on two elongated shafts which extend above and along an insert track. The first or upper shaft, which oscillates once per machine cycle, has an upper portion of the gripper arm keyed thereto so that the gripper arm oscillates toward and away from a corresponding insertion supply station in timed relationship with the other operations occurring at the station. The second shaft also oscillates once during each machine cycle to actuate the movable jaw member into and out of engagement with the fixed jaw member in timed relationship with the oscillation of the gripper arm about the first shaft and with the rest of the machine. A cam keyed to the second shaft acts upon a connecting rod which in turn moves the movable jaw member away from the fixed jaw member against the action of a tension spring. The jaws are held apart in this manner until the gripper arm is oscillated toward the corresponding insertion station whereat the movable jaw is positioned above and the fixed jaw is positioned below an insert. The second shaft then oscillates to close the movable jaw against the fixed jaw to engage and grip the insert. The first shaft thereupon swings away from the insert station, pulling the selected insert therefrom in a direction toward the insert track. Over the insert track the second shaft is oscillated to move the movable jaw member away from the fixed jaw and thereby release the insert, permitting the insert to fall onto the table of the insertion transporting mechanism.

Although only one gripper arm structure has been described above, a plurality of such gripper arms are provided with an insertion machine, each gripper arm being positioned in relation to corresponding insert stations linearly arranged along an insert track. The area above the insert track is rather dense with mechanical parts including the two shafts which run through each gripper arm, as well as the associated linkages and connecting rods for each gripper arm. It is a cumbersome operation to remove or replace an individual gripper arm since the arm must be removed from two shafts, each of which run the entire length of the insert track. Moreover, delicate mechanical adjustments are required for each gripper arm so that the movable jaw member associated therewith can be opened properly by gradual cam action taking into consideration the thickness of the insert materials in the hopper of the corresponding insert station.

Insertion machines of the type described above can operate through a range of speeds. An operator may at a lower end of the operational speed range "step" or "jog" the machine through a machine cycle at a very slow speed as is useful in the case of setting up the machine with new material. At high operational speeds the insertion machine may operate at a rate in the neighborhood of 10,000 cycles per hour.

In setting up an insertion machine, the operator must be cognizant of the fact that each insert must be released at a precise location along the insert track, usually within 3 mm (1/8 inch) of a specified precise location. The time delay associated with the actuation of the movable jaw member thus becomes a factor in determining where on the insert track the insert will be released. If the delay time in actuating the movable jaw member is constant regardless of the operational speed of the machine, significant error can occur in placement of the insert on the insert track. For example, a delay of 20 to 25 milliseconds in actuating the movable jaw member when the insertion machine is operating at 10,000 cycles per hour results in the gripper arm travelling approximately 25 mm (one inch). Thus, a given magnitude of time delay in actuating the movable jaw member in the jog mode or at low speed is not suitable for higher operational speeds and can, when the machine is operated at higher speeds, result in significant misplacement of the insert on the insert track.

It is generally required that document handling gripper arms such as that described above engage a specified number of items at a given point in time. In most situations, for example, it is desirable that a gripper arm engage one document at a time. It is possible, however, that an improper number of items may instead be engaged. In this regard, a gripper arm may fail to engage any items at all or too few items (resulting in a "miss") or may engage too many items (resulting in a "double" or the like).

The failure of a document handling gripper arm or the like to engage a proper number of items should be determined and, in many situations, be communicated either to an operator or to a system including the particular document handling apparatus. To this end, insertion machines have employed various "mistake" detectors. One such detector is disclosed in U.S. Patent 3,744,787 to Morrison wherein an indicator element is electrically conductive and rotatably mounted at the lower end of a gripper arm. The indicator element is biased by a leaf spring which rotates a biasing arm and thereby an indicator element in a clockwise direction. The upper end of the indicator element has a horseshoe or "U" shape which indicates whether the gripper jaws make a "miss" or a "double". In this regard, there is an electrical contact point on each side of the inside of the horseshoe's mouth, one being the "double" contact point and the other being the "miss" contact point. Electrical contact in the event of a "miss" or a "double" causes the activation of a suitable alarm or cut-off control.

Another mistake detector for an insertion machine is disclosed in U.S. Patent 3,885,780 to Morrison, wherein an indicator leaf spring mounted on a clamped arm of a gripper arm makes contact with a lower end of a detector leaf spring when a "miss" occurs. In the event of a "double", the indicator leaf spring makes contact with a contact point of an adjusting screw. U.S. Patent No. 3,885,780 also describes the structure of a gripper arm which may be used in an insertion machine of the type with which the present invention is concerned.

The present invention is characterized by control means for the actuating means responsive to change of the machine cycle rate to alter the timing of the operation of the jaws within a machine cycle.

The jaw actuator control means may include first sensor means for determining a machine cycle rate; second sensor means for determining when during each machine cycle the actuating means should be selectively enabled and disabled; and, means for determing a suitable machine cycle rate-dependent delay interval between the determination made by the second sensor means and the actual selective enablement and disablement of the jaw actuating means. In a preferred embodiment, the delay determining means comprise an up/down counter enabled to count up pulses from a clocking means and, when allowed to do so by the second sensor means, to count down pulses generated in accordance with the second sensor means.

In another embodiment a jaw member has a piece of high coefficient of friction material embedded in a surface oriented to contact articles engaged between the jaws.

The invention will now be described in more detail with reference to the preferred embodiments as illustrated in the accompanying drawings in which reference characters refer to the same parts throughout the various views. The drawings are not necessarily to scale, emphasis instead being placed upon illustrating the principles of the invention.

Fig. 1 is a diagrammatical view of portions of an insertion machine according to an embodiment of the invention;

Fig. 1A is a rear view of a gripper arm according to an embodiment of the invention;

Fig. 1B is a side view taken along the line "C" of the gripper arm of Fig. 1A;

Fig. 2 is an exploded view of the gripper arm of another embodiment of the invention;

Fig. 3 is a circuit diagram showing actuator control means according to an embodiment of the invention;

Fig. 4 is a graph showing various parameters as functions of machine cycles when a machine is operating at 4,500 cycles per hour;

Fig. 5 is a graph showing various parameters as functions of machine cycles when a machine is operating at 10,000 cycles per hour;

Fig. 6 is a detailed view of a portion of the gripper arm of Fig. 1A;

Fig. 7 is a detailed rear view of a portion of the gripper arm of Fig. 1A;

Fig. 8 is a detailed view of a portion of the gripper arm of Fig. 7 cut along the line "D";

Fig. 9 is a side sectional view showing first sensor means and second sensor means mounted in relationship to main drive shaft means;

Fig. 10 is an end view of an actuator timing disc included in a second sensor means; and,

Fig. 11 is a graph showing solenoid force requirements and spring force requirements as functions both of solenoid and upper jaw member positions according to an embodiment of the invention.

Detailed description of the drawings

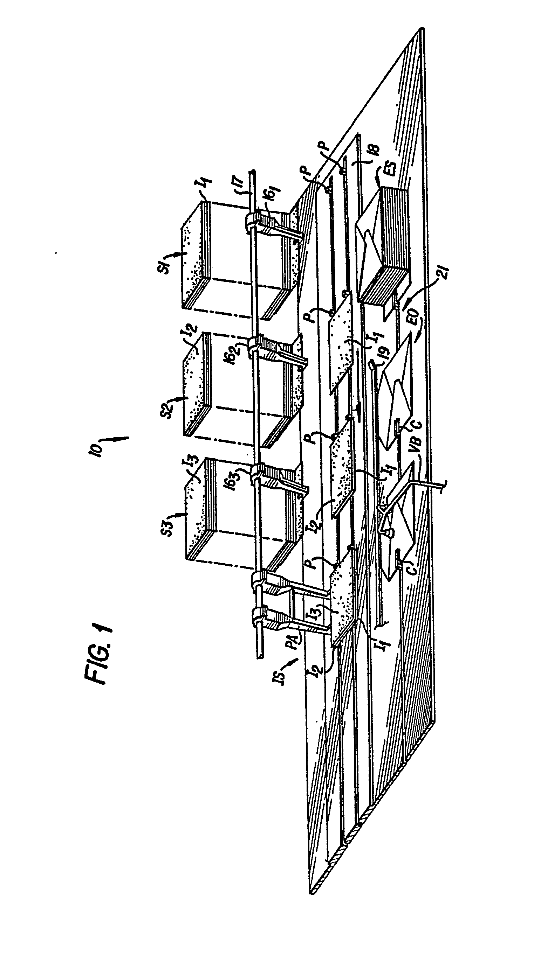

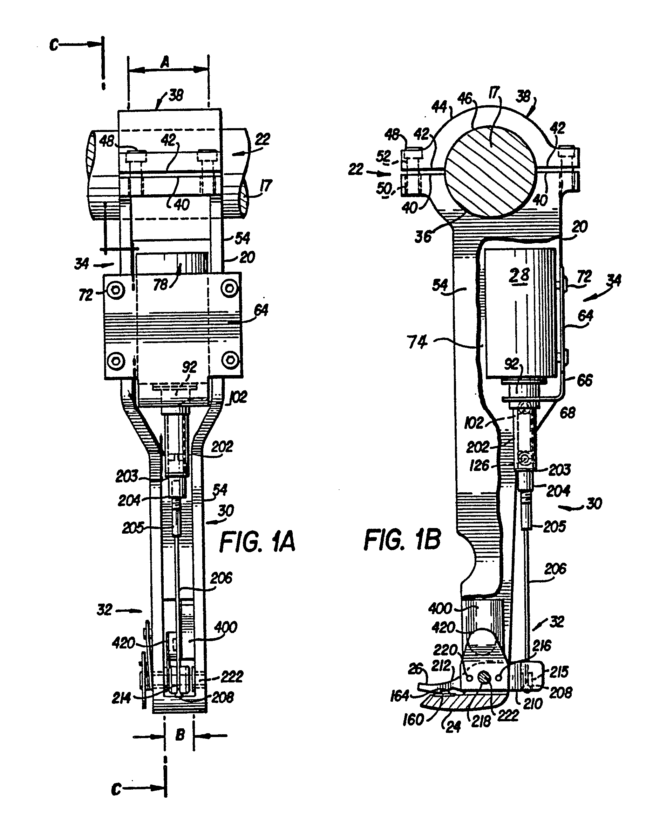

Referring to Fig. 1, there is shown an insertion machine 10 which collects a plurality of inserts into a pile and transports that pile to an inserting station IS; conveys an open envelope to inserting station IS; and, then inserts the pile of inserts into the envelope. During steps unillustrated in Fig. 1 the insertion machine 10 later seals the envelope and processes the envelope for mailing. It will be appreciated that the operation of machine 10 is timed in accordance with a machine cycle. In this respect, an individual envelope requires several machine cycles to be processed. With the exception of a few initial or start-up machine cycles, a pile of inserts is inserted into an awaiting corresponding envelope at the end of each machine cycle.

In order for insertion machine 10 to collect a pile of inserts at inserting station IS, there are provided therein a plurality of insert stack stations or hoppers S1, S2, and S3 and a plurality of corresponding gripper arms $16_1$, $16_2$, and $16_3$ each mounted to a shaft 17 which extends over an insert raceway 18. Insert station S1, gripper arm $16_1$, and shaft 17 serve to withdraw one insert from the stack of inserts and drop that insert onto raceway 18. More particularly, insert station S1 holds a stack of inserts $I_1$ in a manner whereby the bottommost insert is separable from the rest of the stack. Gripper arm $16_1$ is connected to shaft 17 which oscillates once during a portion of each machine cycle in order to rotate arm $16_1$ toward and away from the stack of inserts. While rotating toward the stack, the jaws of gripper arm $16_1$ are opened to allow the arm to engage the bottommost insert. When the shaft 17 stops moving arm $16_1$ toward the stack, the jaws are closed to engage the bottommost insert. Shaft 17 then rotates gripper arm $16_1$ away from the stack, thereby withdrawing the insert from the bottom of the stack. Gripper arm $16_1$ then opens its jaws to release the insert which falls onto insert raceway 18. Thus, insert station S1, gripper arm $16_1$, and shaft 17 cooperate to withdraw one insert from the stack and drop that insert onto raceway 18.

Insert raceway 18 includes a plurality of pairs of pusher pins P which are mounted on a pair of chains (not shown) which are periodically driven by machine 10. The chains are driven once during a portion of each machine cycle and move the pusher pins P to the next insert station. After the just-described dropping of an insert from station S1 onto raceway 18, for example, pins P push the insert to the vicinity of the insert station S2 and stop.

In view of the foregoing, it will be seen that insert station S1, gripper arm $16_1$, shaft 17, and raceway 18 cooperate to withdraw one insert from the stack and convey that insert to station S2. It will be appreciated that for the embodiment shown one insert from station S1 is conveyed to station S2 each machine cycle.

Insert station S2, gripper arm $16_2$, and shaft 17 cooperate in a similar manner as insert station S1, gripper arm $16_1$, and shaft 17 and serve to withdraw one insert from the stack of inserts at station S2 and drop that insert onto raceway 18. More particularly, insert stack station S2 holds a stack of inserts $I_2$ in a manner whereby the bottommost insert is separable from the rest of the stack. Gripper arm $16_2$, which is also connected to oscillating shaft 17, rotates toward the bottommost insert; grabs that insert; rotates away from the stack; and, then releases the insert. This insert falls onto insert raceway 18 which already contains an insert $I_1$. Pusher pins P of raceway 18 advance this pile to the next insert station. Thus, during another machine cycle, insert station S2, gripper arm $16_2$, shaft 17, and raceway 18 cooperate to add an insert $I_2$ to insert $I_1$ and convey the pile to station S3.

Insert station S3, gripper arm $16_3$, and shaft 17 cooperate in a similar manner as insert stations S1 and S2, gripper arms $16_1$ and $16_2$, and shaft 17 and serve to withdraw one insert from the stack of inserts at station S3 and drop that insert onto raceway 18. Insert stack station S3 separates the bottommost insert from the rest of a stack of inserts I3. Gripper arm $16_3$ rotates toward the bottommost insert; grabs that insert; rotates away from the stack; and, releases the insert onto inserts $I_1$ and $I_2$ on raceway 18. This thereby completes the pile of inserts. Raceway 18 then conveys the completed pile to inserting station IS. Thus, during a third machine cycle, insert station S3, gripper arm $16_3$, shaft 17, and raceway 18 cooperate to add an insert $I_3$ to a pile of inserts and convey the pile to inserting station IS.

In view of the foregoing, it will be seen that insert stack stations S1, S2, and S3, respective gripper arms $16_1$, $16_2$, and $16_3$, and insert raceway 18 cooperate to collect a pile of inserts and convey that pile to inserting station IS in three machine cycles.

As mentioned above, insertion machine 10 conveys an open envelope to inserting station IS. To this end there are provided an envelope stack station ES; an envelope flap opening station EO; a flap hold down bar 19; and, an envelope raceway 21. Envelope stack station ES holds a stack of envelopes; separates the bottommost envelope from the rest of the stack; and, feeds the envelope to a clamp C in envelope raceway 21. Envelope raceway 21 includes clamp C which is mounted on a chain (not shown) which is periodically driven by machine 10. The chain is driven once during a portion of each machine cycle and moves the envelope to an envelope flap opening station EO. At station EO, a sucker cup (not shown) rotates toward the closed flap of an envelope, applies a vacuum to the flap and rotates away from the envelope in order to open the flap of the envelope. The raceway 21 then moves the envelope to the inserting station IS while the flap of the envelope is held down by bar 19.

When an envelope and a pile of inserts are at inserting station IS, insertion machine 10 inserts the pile of inserts into the opened envelope. To this end, there are provided in machine 10, a pusher arm PA, and a vacuum bar VB. The vacuum bar VB lifts up the back (top) side of the envelope and shaft 17 rotates and thereby moves pusher arm PA toward the opened envelope. As a result, the pile of inserts will be pushed into the envelope. Thus, pusher arm PA and vacuum bar VB cooperate to insert a pile of inserts into an opened envelope at inserting station IS.

Although Fig. 1 shows an insertion machine with three insert stack stations S1, S2, and S3, it should be understood that the number of insert stack stations is not critical to the present invention and that in other embodiments fewer or more such insert station are employed along a suitable raceway.

## Gripper arm mechanical structure

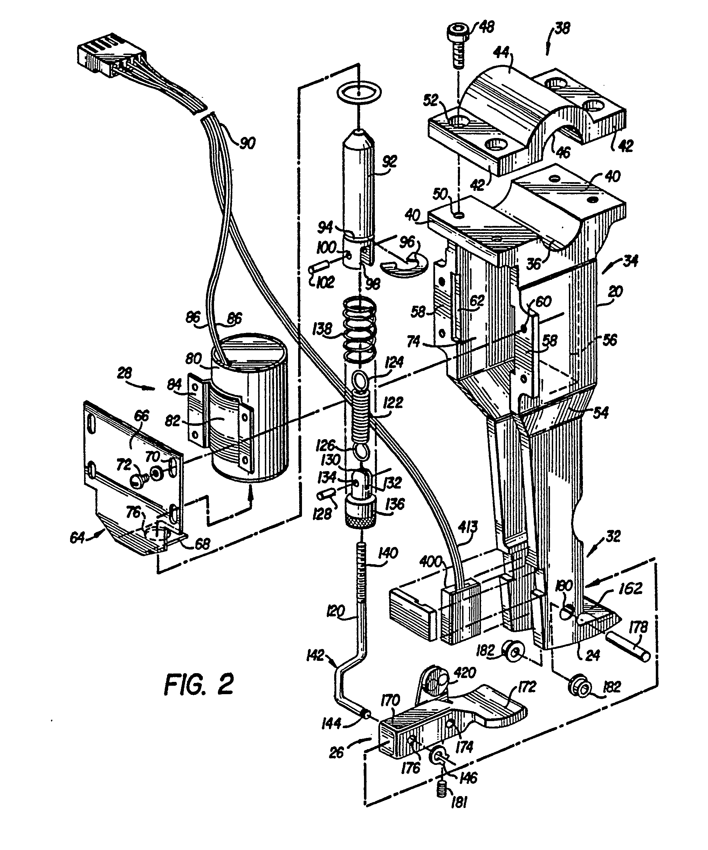

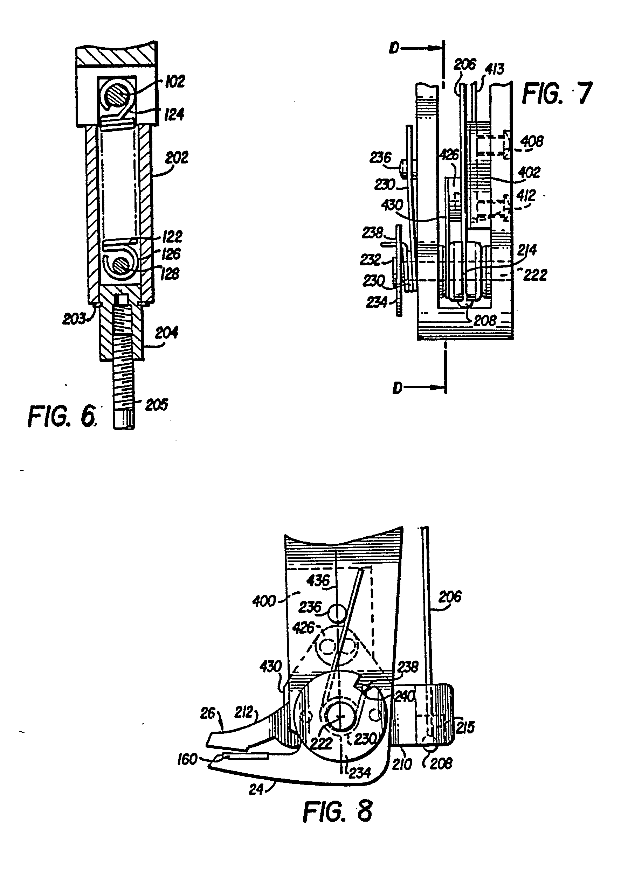

Each gripper arm 16 according to an embodiment of the invention includes a housing 20; securing means 22 for securing the gripper arm to oscillating drive means such as shaft 17; a first article-contacting or jaw member 24; a second article-contacting or jaw member 26; jaw actuation means, such as solenoid actuation means 28; and, linkage means 30. Figs. 1A and 1B (as well as Figs. 6, 7, and 8) show a gripper arm according to one embodiment of the invention while Fig. 2 shows a gripper arm of a second embodiment which includes different structure for its linkage means. Structural elements common to the embodiments of Figs. 1A and 1B and Fig. 2 are assigned the same reference numerals for description purposes hereinafter.

Gripper arm housing 20 has a distal end 32 and a proximal end 34. The means 22 for securing the gripper arm to the oscillating drive shaft 17 includes (1) a semi-cylindrical recess 36 at the top of the proximal end 34 of the gripper arm housing 20, and (2) a clamp member 38. The recess surface 36 is contiguous with flanges 40 on either side of the recess 36. The flanges are generally parallel to the major cylindrical axis of the recess 36. The clamp member 38 mates with the proximal end 34 of the housing 20. The clamp 38 is formed with comparable flanges 42 which mate with the flanges 40 of housing 20. The clamp 38 has a cylindrical sector portion 44 which forms a semi-cylindrical recess 46. Each of the flanges 40 and 42 have two threaded apertures therein appropriately aligned to receive threaded fasteners 48. In this respect, flanges 40 have apertures 50 and flanges 42 have apertures 52. The fasteners 48 secure clamp 38 to the proximal end 34 of the housing 20 so that the gripper arm is clamped onto the oscillating drive shaft 17. Each threaded fastener 48 extends through the aligned apertures 50, 52 and the housing flanges 40 and the clamp flanges 42, respectively.

The gripper arm housing 20 comprises opposing side panels 54 which extend the height of the gripper arm. The two side panels 54 define a space therebetween. At the proximal end 34 of the gripper arm housing 20 the side panels 54 are parallel and separated by a distance A as shown in Fig. 1A. At the mid-section of the gripper arm housing the side panels 54 begin to converge to one another but separate before doing so and continue in parallel manner to the distal end 34 of the housing 20. At the distal end of the housing the side panels 54 are spaced apart at a distance B which is less than distance A as shown in Fig. 1A.

In the region where the side panels 54 are separated by the distance A, a front panel 56 is integral with the side panels 54. In this region where the side panels 54 are separated by the distance A, each side panel 54 has at its back a perpendicularly extending flange 58. Each flange 58 has two threaded apertures 60 therethrough, as well as a vertically extending channel 62 at the intersection of the plane which includes the interior surface of the housing-side panel 54 and the plane which includes the flange 58.

The gripper arm housing 20 also includes a backplate 64 which has a back member 66 and a base member 68 perpendicular thereto. The back member 66 has four apertures 70. Two of the apertures 70 are on each side of the back member 66, each aperture 70 being aligned with apertures 60 on the side panel flanges 58 when the back member is assembled to housing 20. Threaded fasteners 72 extend through the apertures 70 of backplate 64 and through the aperture 60 of the side panel flanges 58 to secure the backplate 64 to the gripper arm housing 20. The base member 68 of the backplate 64 is adapted for placement between the side panels 54 in an area where the side panels begin to converge.

As described above, the side panels 54, front plate 56, back member surface 56, and backplate base member 58 generally define a hollow volume 74. Volume 74 is not totally confined, however, inasmuch as the base member 68 of the backplate 64 has an aperture 76 therein and the height of the back member 66 of backplate 64 is such as to leave an essentially rectangular gap 78 above the backplate 64.

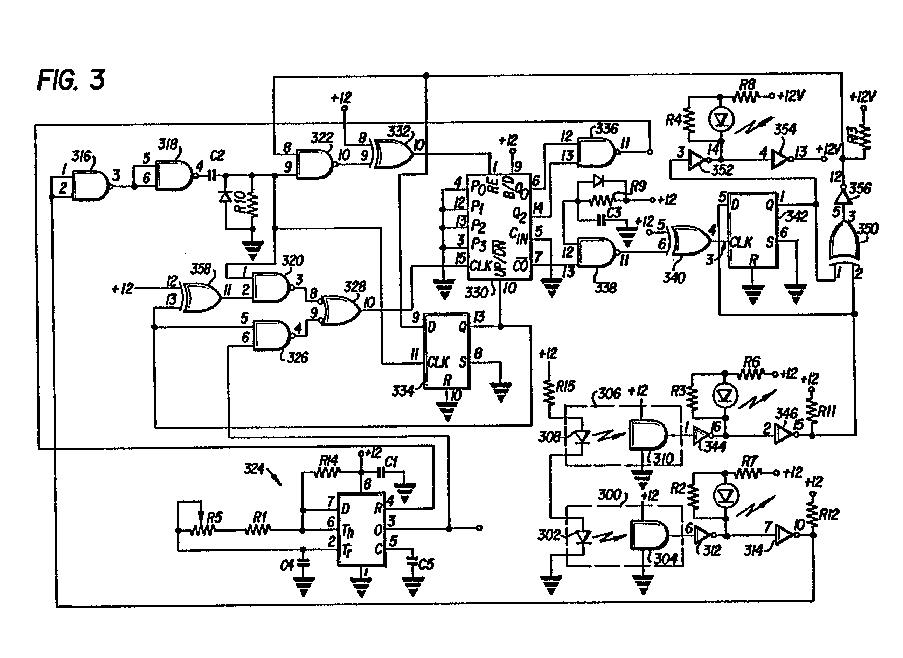

Volume 74 housing the jaw actuating means which, in the illustrated embodiment, is solenoid means 28. The solenoid means 28 has an essentially cylindrical casing 80. Solenoid casing 80 has a mounting plate 82 secured thereto. In the embodiment shown, the mounting plate 82 has protrusions 84 thereon adapted to fit into the channel 62 of the side panel flanges 58. As shown in Fig. 2, electrical leads 86 extend from the interior of the solenoid casing 80 and are included in a ribbon-type cable 90. Although not shown as such in Fig. 1A, it should be understood that the ribbon cable 90 extends from the volume 74 out through the rectangular gap 78 on the back of the gripper arm and is connected to appropriate circuitry including the type of circuit shown in Fig. 3. The circuitry to which the ribbon cable 90 is connected resides on a circuit board or the like situated elsewhere on the particular machine in conjunction with which the gripper arm of the invention operates.

The solenoid means 28 also comprises a plunger means 92. Near its base plunger means 92 has an annular groove about which C-clamp retainer 96 fits. The lower end of the plunger 92 has a slot 98 therein through the diameter of the plunger 92. The plunger 92 also has an aperture 100 extending therethrough along a diameter of the plunger 92 which is transverse to the slot 98. The plunger aperture 100 is adapted to receive a rollpin 102.

Turning now to the embodiment of Fig. 2, the linkage means 30' comprises a biasing means and a connecting rod 120. The biasing means includes a cylindrically coiled inner spring or extension spring 122 having coils formed generally in planes perpendicular to the major axis of the cylinder. The inner spring 122 has first and second ends formed in ring-like fashion, the end rings being formed in planes in which the axis of the cylinder lies (that is, the planes of the end rings are generally perpendicular to the planes of the coils included in inner spring 122). Ring 124 at the upper end of the inner spring 122 is adapted to receive pin 102 therethrough when the ring 124 is inserted into the slot 98 of plunger 92. Ring 126 at the lower end of the inner spring 122 is adapted to receive a pin 128. Lower ring 126 receives pin 128 when the lower ring 126 is inserted into a transverse slot 130 formed in a first end of end cap 132. End cap 132 has an aperture 134 through the diameter thereof which intersects the slot 130 in perpendicular fashion in a manner similar to the slot 98 in apertures 100 of the plunger 92.

End cap 132 has an annular shoulder 136 near its midsection so that an outer spring 138 can be confined between the shoulder 136 and the base member 68 of the backplate 64. Thus, the outer spring 138 is of greater diameter than the inner spring 122 fits in concentric fashion over the inner spring 122. The outer spring 138, according to one mode of the invention, preloads the inner expansion spring 122 by stretching spring 122 a desired distance so that spring 122 causes jaw 26 to exert a force of a desired magnitude on inserts engaged between jaws 24 and 26.

As further seen in Fig. 2, the lower end of the end cap 132 receives a threaded top 140 of the connecting rod 120. The connecting rod 120 extends between planes in which the side panels 54 are included downwardly toward the distal end 32 of the housing 20. The rod crooks outwardly to the side at point 142 as it extends downwardly, and then bends inwardly to have a portion 144 in horizontal orientation at the lowest extent of its travel. The lower end 144 of the rod is adapted to receive a lock member, such as C-clamp retainer 146.

The distal end 32 of the gripper arm housing 20 has, in the Fig. 2 embodiment shown, a first jaw member 24 which is formed integral with the housing 20 as a lower jaw member. A rectangular recess 160 is formed in a surface of the jaw 24 which is oriented to contact an article to be engaged by the gripper arm. The recess 160 is adapted to receive a piece of high coefficient of friction material, such as a piece of urethane 162.

The second jaw member 26 as shown in Fig. 2 comprises a block 170 insertable in a space defined by the separated lower ends of the side panels 54. The block 170 has a protruding curved member 172 extending therefrom, the underneath surface of which contacts articles to be engaged by the gripper arm. Block 170 also has two apertuers 174 and 176 extending therethrough. The aperture 174 is adapted to receive a pivot pin 178 so that the second jaw member 26 can pivot about the pin 178. The second aperture 176 is adapted to receive the horizontally extending lower end portion 144 of the connecting rod 122.

The pivot pin 178 is received not only through aperture 174 in the jaw member 26, but also through aligned apertures 180 in the distal end of the side panels 54. Thus, when the second jaw member 26 is inserted in the space between the side panels 54 near the distal end 32 of the gripper arm housing 20, the apertures 174 and 180 are aligned so that the pivot pin 178 can freely fit therethrough. The pivot pin 178 is retained in position by a set screw 181 so that the pivot pin 178 rotates in bearing-like end caps 182.

The embodiment of Figs. 1A and 1B differs slightly from the embodiment of Fig. 2, in the configuration of the particular linkage means utilized. While the embodiment of Figs. 1A and 1B, like that of Fig. 2, has an inner spring 122, the inner spring 122 of the embodiment of Figs. 1A and 1B is positioned in a cylindrical spacer or housing 202. As in the Fig. 2 embodiment, the upper ring 124 of the inner spring 122 is secured by plunger pin 102 to the solenoid plunger 92. The top of the cylindrical housing 202 abuts the lower end of the plunger 92.

The lower end of cylindrical housing 202 abuts a retaining ring 203. The retaining ring 203 is carried in an annular recess on a clevis-type end cap 204. The pin 128 extends radially through the end cap 204 in a manner understood from the description of the end cap 132 of Fig. 2. End cap 204 axially receives a pin 205 which has an upper exterior portion thereof threaded for engagement in an axial aperture of end cap 204. An upper end of a cable 206 is connected to the lower end of pin 205. Cable 206 extends from the pin 205 to the distal end 32 of the gripper jaw. At its lower end the cable 206 has a ball 208 fixedly attached thereto.

Located in the cylindrical housing 202 in the manner described above, the inner spring 122 of Figs. 1A and 1B is held so that it is generally extended about 0.25 inches beyond its length at rest. The spring 122 is thus preloaded to have a desired spring force.

For the embodiment of Figs. 1A and 1B and the upper jaw member 26 comprises a block member 210 and a curved protrusion 212. The underside of the protrusion is used to contact articles engaged by the gripper arm. The block member 210 has a narrow slit 214 at the back thereof through which the lower portion of cable 206 extends. At the base of the slit 214 is an essentially square chamber 215. Chamber 215 houses ball 208. When cable 206 is pulled upwardly, the ball 208 thereon, having a greater diameter than the width of the slit 214, bears against the top interior surface of the chamber 215, causing the upper jaw member 26 to pivot so that the upper jaw member 26 approaches the lower jaw member 24 so that the jaw essentially closes.

The block member 210 of second jaw 26 also has three apertures 216, 218, and 220 extending therethrough. The central aperture (aperture 218) accommodates a pivot pin 222 about which the jaw member 26 pivots.

The embodiment of Figs. 1A and 1B and 6 further comprises means for biasing the jaw members in an open position. The biasing means includes torsion spring 230 (seen in Figs. 7 and 8). An intermediate portion of the torsion spring 230 has a helical shape which is concentric with and fits over an exposed end of pivot pin 222, the end of pin 222 protruding beyond a side panel (the left side panel as seen in Fig. 8) of the gripper arm. At its exposed, protruding end the pivot pin 222 has a head 232 formed thereon. A disc 234 is secured on the pivot pin 222 just inside its head 232. The helical portion of the torsion spring extends between the disc 234 and the left side panel of the gripper arm. At one of its ends the torsion spring 230 departs from its helical configuration and assumes a linear shape as it extends upwardly to a retaining pin 236 against a side of which it bears (see Fig. 8). At its other end the torsion spring 230 extends through a square notch 238 formed on the circumference of the disc 234. The portion of the torsion spring 230 that extends through the disc 234 bears against a corner 240 of the notch 238. Spring 230 bears against corner 240 to exert a biasing force on the disc 234 and the pivot pin 222 whereby the upper jaw member 26 is normally held open in the absence of application of tension to the cable 206. When cable 206 and ball 208 thereon are urged upwardly, however, ball 208 bears against the upper interior surface of the chamber 215 and exerts a force on block 210 which overcomes the biasing force of the torsion spring 230 so that the block 210 pivots about pin 222, thus causing jaw 26 to close.

Gripper arm-associated opto/electrical structure

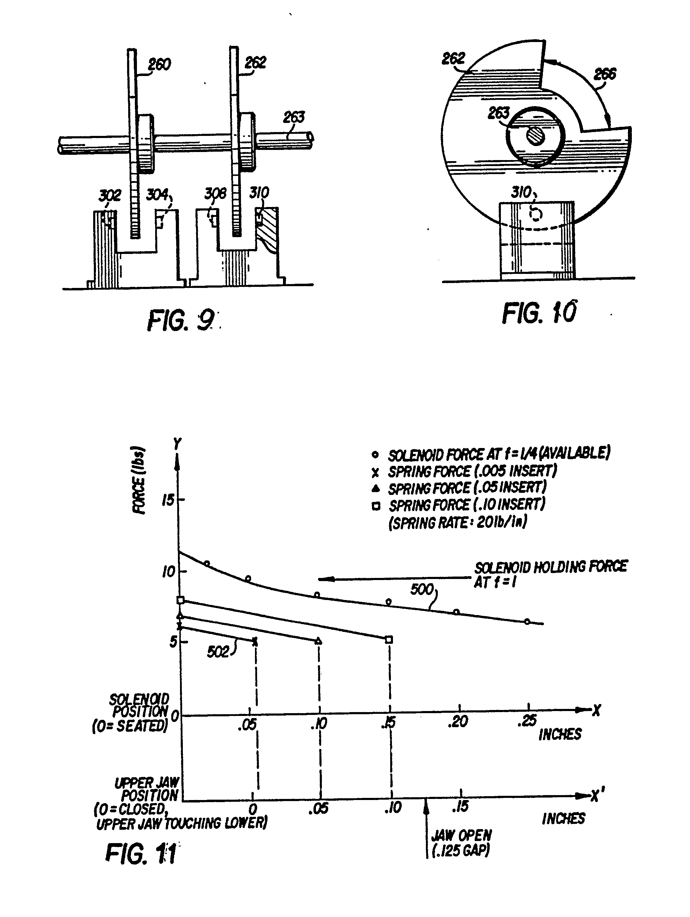

Fig. 3 shows circuitry utilized in connection with the gripper jaw actuating control means according to an embodiment of the invention. As shown in Figs. 9 and 10, an encoder disc 260 and an actuator timing disc 262 are mounted to rotate on a main drive shaft 263 of a machine, such as an insertion machine, in connection with which the gripper arm 16 of the invention operates. The main drive shaft rotates once per machine cycle and has various timing and drive means rigidly coupled thereto for power transmission, such as the aforementioned oscillating drive means 17, for example. The encoder disc 260 is a 64-tooth disc. The actuator timing disc 262 has its circumference configured to allow the passage of light (in a direction perpendicular to the plane of the disc) about a disc central angle 266 corresponding to portions of a machine cycle during which the actuation means of the gripper arm is to be actuated so that the second jaw is either in contacting relation with the first jaw or has an article gripped between the first jaw and the second jaw.

Fig. 3 shows an encoder disc sensor 300 including the above-mentioned encoder disc 260 positioned to cause passage of light from an LED 302 to be periodically incident on circumferential teeth of the encoder disc. If the light from LED 302 impinges on a tooth of the disc, then the light is not transmitted to receiver 304. If a circumferential space between the teeth on the encoder disc is aligned with a beam of light from LED 302, then the receiver 304 detects the light. An actuator timing disc sensor 306 also includes the above-mentioned actuator timing disc 262 with an LED 308 and a photoreceiver 310 similarly arranged about the actuator timing disc.

The opto-interrupt receiver 304 is connected to two inverting drivers 312, 314 in series with one another. The output of the inverting driver 314 is connected to both input terminals of a NAND 316, the output of which is connected to both input terminals of a second NAND 318. The output of NAND 318 is connected to two other NANDs (NANDs 320 and 322).

The circuit of Fig. 3 also includes a clock or timer 324 having its clock output pin (pin 3) connected to a first input of a NAND 326. The NANDs 320 and 326 have their output terminals connected to respective input terminals of a false-actuated OR gate 328. The output terminal of OR gate 328 is connected to a clock input pin (pin 15) of a delay determination means, such as a presettable up/down binary counter 330.

Up/down counter 330 has its reset input pin connected to an output terminal and an EOR gate 332. One input of the EOR 332 is connected to +12 volts; the other input terminal is connected to the output of NAND 322.

The up/down direction pin (pin 10) of the counter 330 is connected to the Q output of a "D" flip-flop 334. The set and reset input pins of the flip-flop 334 are grounded. The "D" or data input pin of the flip-flop 334 is connected to a "compare" signal in the manner hereinafter described. The clock input pin (pin 11) of the flip-flop 334 is connected to the output of NAND 318.

The data input pins (pins 4, 12, 13, and 3) and pin 5 of counter 330 are grounded. Output pins 6 and 14 of the counter 330 are connected to respective input terminals of a NAND 336. The output terminal of NAND 336 is connected to the reset terminal (pin 4) of the timer 324.

The carry-out terminal (pin 7) of counter 330 is connected to a first input terminal of a NAND 338. The second input terminal of NAND 338 is connected to an appropriate voltage for setting initial conditions for machine start-up. The output of NAND 338 is connected to a first input terminal of an EOR 340, the other input terminal of the EOR 340 being connected to a +12 volts. The output of the EOR 340 is connected to a clock input pin (pin 3) of a "D" flip-flop 342.

Flip-flop 342 has its reset and set terminals (pins 4 and 6, respectively) connected to ground. The "D" or data terminal is connected to the output of inverting drivers 344 and 346 which are connected in series between the receiver 310 and the flip-flop 342. The Q output terminal (pin 1) of the flip-flop 342 is connected both to the first input terminal of an EOR gate 350 and to two inverting drivers 352 and 354 in series. The other input terminal of the EOR 350 is connected through the inverting drivers 344 and 346 to the receiver 310 of the actuator timing disc 306.

The output terminal of the EOR 350 is connected to an inverting driver 356. The output terminal of the inverting driver is in turn connected both to the data input pin (pin 9) of flip-flop 334 and to the second input terminal of NAND 322.

The Q output terminal of flip-flop 334 is also connected both to the second input terminal of NAND 326 and to a first input terminal of an EOR gate 358. The other input terminal of the EOR gate 358 is connected to +12 volts. The output terminal of the EOR gate 358 is connected to the second input terminal of NAND 320.

In the illustrated embodiment, NANDs 316, 318, 320, 322, 326, 336, 338, and false-activated OR 328 are included in a single integrated circuit chip such as a QUAD-2 Input NAND Schmitt Trigger. Counter 330 is a presettable up/down binary counter. EOR gates 332, 340, 350, and 358 are included in a quad Exclusive OR gate. Flip-flops 334 and 342 are included in a Dual "D" Flip-Flop Chip. Clock 324 is a linear timer. Inverter drivers 312, 314, 344, 346, 352, 354, and 356 are included in a 7-channel PMOS Input Driver.

For the embodiment of Fig. 3, by way of example, resistance values are given to the resistors and capacitance values are given to the capacitances as shown on the following chart:

RESISTANCES
R1=R2=R3=R4=1K
R5=5K (variable)
R6=R7=R8=1.2K
R9=R10=100K
R11=R12=R13=R14=10K
R15=470 Ohm

CAPACITANCES
C1=0.1F
C2=0.001F
C3=1.0F
C4=0.47F
C5=0.01F

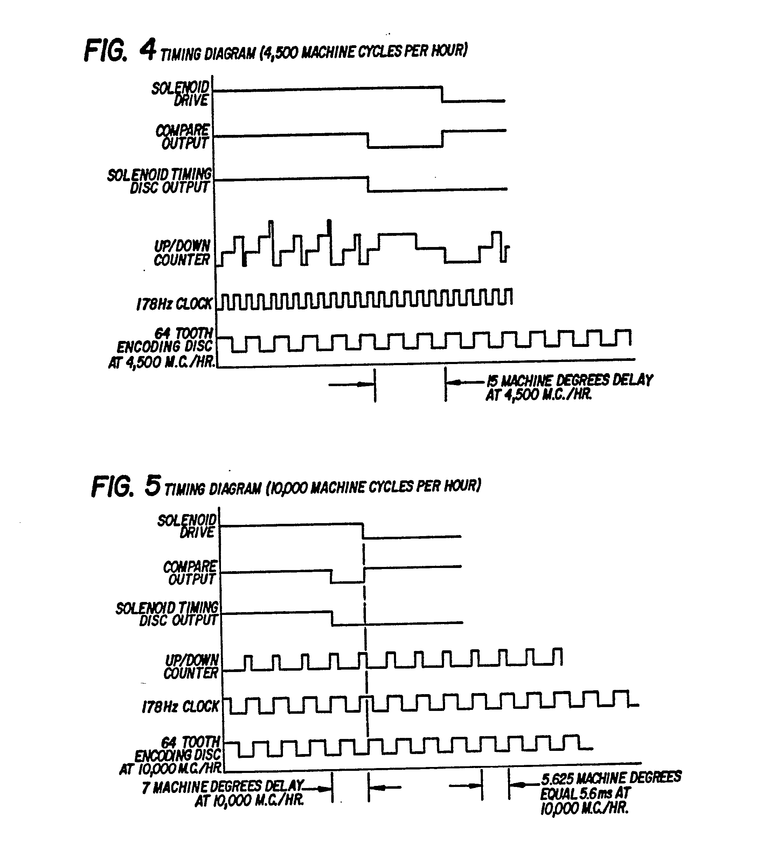

For the most part the ensuing discussion of the operation of the gripper arm assumes that the normal operations of the insertion machine are currently on-going and that initilization or set-up of the insertion machine has already taken place. That is, the operation of the insertion machine is described herein as being for the most part in the middle of a job. Where appropriate, however, operating steps or results that have impact or pertain to machine set-up or calibration are also described. In this respect, from Fig. 4 and portions of the ensuing discussion it is understood that the operation of a slow jog mode such as used in machine set up is, except for matters of timing, similar to the on-going operation.

Gripper jaw opening operation

At an appropriate point in the machine cycle when the gripper jaws 24 and 26 are engaging an insert, light from the LED 302 of opto-interrupter of encoder disc sensor 300 radiates through spaces between the teeth on the encoder disc so as to be incident upon receiver 304, causing the receiver 304 to output a true signal to the inverting driver 312. Inverting driver 312 inverts the true signal to a false signal for application to inverting driver 314. Inverting driver 314 in turn inverts the false signal to a true signal. When the teeth of the encoder disc interrupt the light between the LED 302 and the receiver 304, a false signal appears at the output of the inverting driver 314. Thus, as the encoder disc rotates, a series of pulses is produced. In the series of encoder pulses generated by the 64-tooth disc, the machine main shaft rotates 5.625° of the machine cycle (5.625 DMC) between the leading edges of consecutive true signals. The graphs of encoder pulse trains generated in this manner appear in Figs. 4 and 5. The encoder pulse train is applied to NANDs 316 and 318 of the circuit shown in Fig. 3.

During operation the clock 324 is generating clock pulses at a frequency determined by the manner in which the pins of the clock 324 are connected. When connected in the manner shown in Fig. 3 and described herein, the clock 324 generates pulses at a 178 Hz rate. Trains of pulses from the clock 324 are shown in Figs. 4 and 5. Note that in Fig. 4 there are more clock pulses relative to the number of encoding pulses than shown in Fig. 5. In Fig. 4, the machine is operating at 4,500 machines cycles (MC) per hour whereas in Fig. 5 the machine is approaching 10,000 MC.

The clock pulses from clock 324 are applied to the first input terminal of NAND 326. Whenever the second input terminal of the NAND 326 is also true, a false signal is applied from the NAND 326 to the false-actuated OR gate 328. When the other input terminal of the false-actuated OR 328 is true, then pulses from the OR 328 are applied to the clock input pin of the pressetable up/down countre 330.

Counter 330 counts up when pin 10 (the directional pin) is true and counts down when the directional pin is false. The clock pulses of carry out pin 7 of the counter 330 are seen in Figs. 4 and 5. In relation to the clock pulses from clock 324, the leading edge of the output pulses from the counter 330 occur substantially at the same time as the leading edge of clock pulses from the clock 324.

Reset pin 1 of the counter 330 is ultimately connected to the encoder disc sensor 300, so that the reset pin of counter 330 receives a train of pulses the frequency of which is related to the number of machine cycles occuring per hour. The leading edge of a pulse in this encoder train from the EOR 332 causes the counter to be reset, thereby terminating the output pulse from the counter 330. Thus, as seen in Fig. 4, when the machine is operating relatively slowly at a rate of 4,500 MC per hour, the counter 330 can count up a greater number of clock pulses before it is reset by the leading edge of an encoded pulse from the EOR 332. In the graph of Fig. 5 on the other hand, the counter 330 has sufficient time only to count up one clock pulse before being reset.

The above description of the operation assumes that the actuator timing disc mounted on the machine drive shaft is in a position to permit the passage of light from the LED 308 to the receiver 310. Under such circumstances the actuator is activated, and hence the linkage 30 causes the second jaw member 26 to be urged toward a contacting relationship with the first jaw member 24. The actuator timing disc has patterns on its circumference to obstruct the position of light from the LED 308 to the receiver 310 at points in the machine cycle in which it is desired for the second jaw 26 to open with respect to the jaw 24 as a result of the actuator activation. When this occurs, the absence of light at the receiver 310 causes output from the inverting driver 346 to go false. This false signal is applied to the second input of the EOR 350. The first input terminals of the EOR 350 still receives a true signal from the flip-flop 342 since no clock pulse has been applied to the flip-flop 342 to cause the flip-flop 342 to be effected by the false signal appearing at the "D" pin (pin 5) of the flip-flop 342. The true signal from the Q output of the flip-flop 342 keeps the solenoid drive at a true level meaning that the solenoid 28 is activated and that the jaws 24, 26 remain together.

Since the EOR 350 now receives a true signal from the flip-flop 342 and a false signal from the inverting driver 346, the output of the EOR 350 goes true. This true signal is inverted by the inverting driver 356 to be false. The false signal from the inverter 356 is seen in Figs. 4 and 5 as dropping to a false level in the portion of the graph labelled "Compare Output".

The false signal from the inverting driver 356 (i.e. the "compare output" signal) is used in two ways. First, it is used to reverse the direction of the counting of the counter 330. In this regard, the false signal from inverter 356 is applied to the data input pin (pin 9) of the flip-flop 334 which causes the Q output pin to go false when the next encoder pulse is received at the clock input pin of the flip-flop 334. The false output of flip-flop 334 at the Q terminal causes the counter 330 to change direction (that is, to count down). Second, the false signal from the inverting driver 356 is used to keep the EOR 332 from resetting the counter 334 while the counter 334 is counting down.

As mentioned above, the false signal from the inverting driver 356 causes the Q output terminal of the flip-flop 334 to go false. This false signal is also applied to the NAND 326 and the EOR 358. A false signal applied to NAND 326 keeps the false-actuated EOR 328 from passing clock pulses to the counter 330 while the counter is counting down. A false applied to the EOR 358 allows the EOR 328 to pass encoder pulses to the counter 330 rather than clock pulses.

Thus, when the direction of the counter 330 is changed so that the counter 330 counts down, the counter 330 no longer counts clock pulses, but encoder pulses. When the number of encoder pulses counted down equals the number of clock pulses counted up, the carry-out pin (pin 7) of the counter 330 causes a signal to be applied to the clock terminal of the flip-flop 342 so the false signal appearing at the "D" pin is clocked through the flip-flop 342 and a false signal appears at the Q output terminal. A false signal at the Q output terminal of the flip-flop 342 deactivates the jaw actuator 28. Deactivation of the jaw actuator means that the plunger 92 is free to fall downwardly, as does the linkage 30. Downward action of the linkage 30 causes the second jaw member 26 to pivot about pivot pin 178 in a direction away from the first jaw member 24. The false signal at the Q output terminal of flip-flop 342 also, when coupled with the false signal from the inverting driver 346, causes the compare signal (the output of the inverting driver 356) to again go true, thus enabling the clock 330 to start counting in an up direction and enabling the EOR 328 to pass clock pulses to the counter 330 rather than encoder pulses.

From the foregoing it is seen that an advantage of the invention is making the time at which the jaw actuator is selectively activated and deactivated dependent upon the speed in conjunction with which the gripper arm operates. As shown in Fig. 4, when the machine is operating at 4,500 MC per hour, a delay of 15 DMC occurs between an indication from the actuator timing disc that the actuator is to be deactivated and the actual deactivation. In Fig. 5 where the machine operates at 10,000 MC per hour, on the other hand, the delay is 7 DMC. Less delay for deactivation of the actuator is required at higher machine operating speeds than lower machine operating speeds for the gripper arm to carry out operations that result in precise placement of an article engaged and released by a gripper arm. By making the time of the deactivation of the jaw actuator dependent upon the speed of the machine, an operator can set up a machine in a slow jog mode for a gripper arm to deposit an article at a precise location on transport means with confidence that when the machine is operating at a higher speed essentially the same precise placement of the article will occur.

Gripper arm jaw closing operation

It has been described above how the second jaw member 26 opens with respect to jaw member 24 after the jaws 24, 26 had previously been in contacting relation. The preceding discussion provides the man skilled in the art with ample understanding of how, once the jaw 26 has been opened relative to the jaw 24, the jaw 26 again closes to engage whatever article may be between the jaws 24 and 26. Hence, the following discussion of the closing of jaw 26 does not include features analogous to those already described, but rather the relationship of solenoid force requirements and spring force requirements involved in the closing of jaw 26.

When the actuator timing disc is again in a position to permit light to pass from LED 308 to receiver 310, the input to the solenoid 28 goes true to activate the solenoid 28. The activation of solenoid 28 creates a force on cable 206 to move cable 206 in an upwards direction. The amount of force created by the solenoid depends upon such factors as the force curve for the particular solenoid used and its duty cycle. The force curve for the pull-type solenoid described herein is shown by line 500 in Fig. 11 for a solenoid operation for a duty cycle f=1/4 (f="on" time divided by the sum of "on" and "off" times). For the solenoid shown, a voltage of 54 volts DC is applied upon activation for 100 milliseconds. When the solenoid is seated the voltage is reduced to 27 volts DC with a resultant holding force of 40 N (9 pounds)..

The graph of Fig. 11 shows solenoid force and spring force plotted as functions of both the solenoid position (upper X axis) and the position of the upper jaws (low X' axis). The X axis of Fig. 11 refers to the extension of the plunger 92 of the solenoid 28, the zero position of the X axis being the seated position of plunger 92. The X' axis of Fig. 11 refers to the distance separating the lower jaw member 24 and the upper jaw member 26. The zero of axis X' is offset by about 1.27 mm (0.05 inch) with respect to the zero of axis X. This offset occurs because after the upper jaw 26 contacts the lower jaw 24 the solenoid plunger 92 travels another 1.27 mm (0.05 inch) before seating. Through offset, the scales for the axes X and X' are the same since the distance from pivot point 222 to the point where cable 206 attached to pin 205 is substantially equal to the distance from the pivot point 222 to the position of jaw 26 which selectively contacts jaw 24.

Accordingly, and in view of the relationship described above, for jaw 26 to contact the jaw 24 the plunger 92 must be retracted 3.175 mm (0.125 inches). When an insert is to be engaged between jaws 24 and 26, the plunger need be retracted 3.175 mm (0.125 inches) less the thickness of the insert. Thus, for an insert 0.127 mm (0.005 inch) thick as shown by line 502 in the graph of Fig. 15, the plunger 92 must be retracted 3.175 mm (0.25 inch)–0.127 mm (0.005 inch)=3.048 mm (0.120 inch). Further, if it be desired that the insert be held by a holding force of 26.7 N (6 pounds), for example, the plunger 92 must be retracted a further amount which will extend the expansion spring 122 sufficiently so that the spring 122 will cause the insert to see a 26.7 N (6 pound) holding force.

Assuming, for example, that the spring 122 has a 3.5 N/mm (20 pound per inch) spring rate, if the spring 122 were not preloaded the spring 122 would have to be extended 7.62 mm (0.3 inches) to achieve the 26.7 N (6 pound) holding force. The distance of retraction of the plunger 92 to both move the 3.048 mm (0.120 inch) to displace jaw 26 and the 7.62 mm (0.3 inch) required to extend the spring 122 requires a total retraction of the plunger 92 on the order of 10.67 mm (0.42 inch). Plunger retraction for such a great distance requires considerable time and results in lower solenoid forces. According to the present invention, however, the plunger 92 need not be retracted 7.62 mm (0.3 inch) to extend spring 122. As described hereinbefore, housing 202 preloads the spring 122 of Figs. 1A and 1B so that the spring 122 is already extended to provide a starting force of 22.25 N (5 pounds). Thus, when the solenoid is actuated the plunger is retracted approximately 3.05 mm (0.120 inch so that jaws 26 and 24 engage therebetween an insert of thickness 0.127 mm (0.005 inch) and then retracted further an additional 1.27 mm (0.05 inch) in order to extend the expansion spring 122 an amount sufficient to gain an additional 4.45 N (1 pound) holding force. The 1.27 mm (0.05 inch) further expansion of springs 122 (equivalent to 4.45 N) and its preloaded expansion (equivalent to 22.25 N) gives a total 26.7 N (6 pounds) holding force.

## Claims

1. An insertion machine having a gripper arm (16) for selective engagement and retrieval of articles ($I_1$, $I_2$...) from a station ($S_1$, $S_2$...) in timed relationship with the cycle of operation of the machine, the gripper arm being drivable in an oscillatory manner for the retrieval of the articles and having a pair of jaws (24, 26) for engaging the articles and an actuating means (28) coupled by a linkage (120) with one of said jaws (26) to move that jaw towards and away from the other jaw (24) for engagement and release of the articles characterized by control means (Figs. 3, 13 and 14) for the actuating means responsive to change of the machine cycle rate to alter the timing of the operation of the jaws within a machine cycle.

2. An insertion machine as claimed in claim 1 in which the control means comprises first sensor means (300) for determining the machine cycle rate, second sensor means (306) for determining when during each machine cycle the actuating means should be selectively enable and disabled, and means (330) for determining a suitable delay interval between said determination made by said second sensor means and the actual selective enablement and disablement of said actuating means.

3. An insertion machine as claimed in claim 2 in which said first sensor means comprises means (300) for generating pulses related to said machine cycle rate; and wherein said means for determining a suitable delay interval comprises up/down counter means (330), said up/down counter means being adapted to (1) count up pulses from a clocking means when enabled to count in an up direction and (2) to count down pulses from said means for generating pulses related to said machine cycle rate when enabled to count in a down direction; and, multivibrator means (342) triggerable when said up/down counter has counted down a number of pulses equal to the number of pulses counted up, whereby when triggered said multivibrator means selectively enables and disables said actuating means.

4. An insertion machine as claimed in any of claims 1 to 3 wherein the actuating means comprises a solenoid (28) mounted on the arm (16) and having a plunger (92) coupled by the linkage to the said one jaw and the linkage includes biasing means (122) for biasing the said one jaw (26) towards the other jaw (24) when the plunger is in the position resulting from energization of the solenoid and means (138; 202) for pre-loading the biasing means to reduce the extent of movement of the plunger necessary to achieve the required holding force at the jaws.

5. An insertion machine as claimed in claim 4 in which the biasing means is a first spring (122) and the pre-loading means comprises a second spring (138) acting to stretch the first spring.

6. An insertion machine as claimed in claim 4 in which the biasing means is a spring (122) and the pre-loading means comprises a cylindrical housing (202) for the biasing spring which holds the biasing spring in a partially-extended condition.

7. An insertion machine as claimed in any of the preceding claims in which at least one of the jaws has a high friction coefficient member (160) accommodated in a recess in the gripping surface of the jaw member.

## Patentansprüche

1. Einschubmaschine mit einem Greiferarm (16) zum selektiven Greifen und Abziehen von Gegenständen (I₁, I₂...) von einer Station (S₁, S₂...) in zeitlicher Beziehung relativ zum Arbeitstakt der Maschine, wobei der Greiferarm zu Hin- und Herbewegungen zum Abziehen der Gegenstände veranlaßbar ist und ein Paar von Klauen (24, 26) zum Greifen der Gegenstände sowie einen Betätigungsmechanismus (28) hat, der über einen Verbindungsmechanismus (120) mit einer der Klauen (26) gekoppelt ist, um diese Klaue auf die jeweils andere Klaue (24) hin oder von ihr weg zu bewegen, um die Gegenstände zu greifen bzw. loszulassen, gekennzeichnet durch Steuereinrichtungen (Fig. 3, 13, 14) für den Betätigungsmechanismus in Abhängigkeit von Änderungen der Geschwindigkeit des Maschinentaktes zur Änderung des Zeitablaufs der Betätigung der Klauen während des Maschinentaktes.

2. Einschubmaschine nach Anspruch 1, bei welcher die Steuereinrichtungen einen ersten Fühler (300) zur Bestimmung der Geschwindigkeit des Maschinentaktes, einen zweiten Fühler (306) zur Bestimmung des Zeitpunktes, wann während jedes Maschinentaktes der Betätigungsmechanismus selektiv in Tätigkeit gesetzt oder abgeschaltet werden soll, sowie Mittel (330) zur Bestimmung eines geeigneten Verzögerungsintervalls zwischen der von dem zweiten Fühler getroffenen Feststellung und der tatsächlichen selektiven Einschaltung und Abschaltung des Betätigungsmechanismus enthält.

3. Einschubmaschine nach Anspruch 2, bei welcher der erste Fühler Mittel (300) zur Erzeugung von Impulsen entsprechend der Geschwindigkeit des Maschinentaktes enthält und wobei die genannten Mittel zur Bestimmung eines geeigneten Verzögerungsintervalls einen Auf-/Abzähler (330) enthalten, der zum einen Impulse zur Aufwärtszählung von einem Taktgeber erhält, wenn er im Sinne einer Aufwärtszählung eingestellt ist, und zum anderen Impulse zur Abwärtszählung von den genannten Mitteln zur Erzeugung von Impulsen entsprechend der Geschwindigkeit des Maschinentaktes erhält, wenn er im Sinne einer Abwärtszählung eingestellt ist, und wobei die Mittel zur Bestimmung des geeigneten Verzögerungsintervalls weiter einen Multivibrator (342) enthalten, der auslösbar ist, wenn der Auf-/Abzähler eine Anzahl von Impulsen abwärts gezählt hat, die gleich der Anzahl von Impulsen der Aufwärtszählung ist, derart, daß bei einer Auslösung des Multivibrators dieser selektiv den Betätigungsmechanismus einschaltet oder abschaltet.

4. Einschubmaschine nach einem der Ansprüche 1 bis 3, bei der der Betätigungsmechanismus ein Solenoid (28) enthält, das an dem Greiferarm (16) montiert ist und einen Tauchkolben (92) aufweist, der über den Verbindungsmechanismus mit der genannten einen Klaue gekoppelt ist, wobei der Verbindungsmechanismus Vorspannmittel (123) zur Vorspannung der genannten einen Klaue (26) auf die jeweils anders Klaue (24) hin enthält, wenn sich der Tauchkolben in einer Stellung entsprechend der Einschaltung des Solenoids befindet und wobei ferner der Betätigungsmechanismus Mittel (138; 202) enthält, um die Vorspannmittel voreinzustellen, um die Ausdehnung der Bewegung des Tauchkolbens zu reduzieren, welche notwendig ist, um die erforderliche Haltekraft an den Klauen zu erzeugen.

5. Einschubmaschine nach Anspruch 4, bei welcher die Vorspannmittel eine erste Feder (122) umfassen und die Mittel zur Voreinstellung eine zweite Feder (138) aufweisen, die im Sinne einer Streckung der ersten Feder wirksam sind.

6. Einschubmaschine nach Anspruch 4, bei welcher die Vorspannmittel eine Feder (122) umfassen und die Mittel zur Voreinstellung ein zylindrisches Gehäuse (202) für die Vorspannfeder enthalten, welches die Vorspannfeder im teilweise gestreckten Zustand hält.

7. Einschubmaschine nach einem der vorhergehenden Ansprüche, bei welcher mindestens eine der Klauen ein Bauteil (160) hohen Reibungskoeffizientes enthält, das in einer Ausnehmung in der Greiferfläche der betreffenden Klaue angeordnet ist.

## Revendications

1. Appareil d'introduction ayant un bras préhenseur (16) pour engagement sélectif avec des articles (I₁, I₂...) et reprise de ceux-ci à partir d'un poste (S₁, S₂,...) en relation de temps avec le cycle de fonctionnement d'une machine, le bras préhenseur étant entraînable de manière oscillante pour la reprise des articles et ayant une paire de mâchoires (24, 26) pour s'engager avec les articles et un moyen d'actionnement (28) attelé par une tringle (120) avec l'une (26) desdites mâchoires pour déplacer celle-ci dans des sens de rapprochement et d'éloignement de l'autre mâchoire (24) afin de s'engager avec les articles et de s'en dégager, caractérisé par un moyen de commande (13 et 14, figure 3) du moyen d'actionnement sensible au changement de rythme du cycle de la machine afin de modifier le moment du fonctionnement des mâchoires à l'intérieur d'un cycle de la machine.

2. Appareil d'introduction selon la revendication 1 dans lequel le moyen de commande comprend un premier moyen de détection (300) pour la détermination du rythme du cycle de la machine, un deuxième moyen de détection (306) pour la détermination du moment pendant chaque cycle de la machine auquel le moyen d'actionnement devrait être sélectivement rendu opérant et inopérant, et un moyen (330) pour la détermination d'un intervalle de retard convenable entre ladite détermination faite par le deuxième moyen de détection et l'état réel opérant et inopérant sélectionné dudit moyen d'actionnement.

3. Appareil d'introduction selon la revendication 2 dans lequel le premier moyen de détection comprend un moyen (300) de génération d'impulsions en relation avec ledit rythme du cycle de la machine, et dans lequel le moyen pour la détermination d'un intervalle de retard convenable comprend un compteur (330) de comptage/décomptage, ce compteur de comptage/décomptage étant adapté pour (1) compter des impulsions d'une horloge quand il est rendu opérant pour compter dans le sens du comptage et (2) pour décompter des impulsions provenant dudit moyen de génération d'impulsions en relation avec le rythme du cycle de la machine quand il est rendu opérant pour compter à rebours dans le sens du décomptage; et un multivibrateur (342) déclenchable quand ledit compteur de comptage/décomptage à décompté un nombre d'impulsions égal au nombre des impulsions comptées, le déclenchement de ce multivibrateur rendant sélectivement opérant et inopérant ledit moyen d'actionnement.

4. Appareil d'introduction selon l'une quelconque des revendications 1 à 3 dans lequel le moyen d'actionnement comprend un solénoïde (28) monté sur le bras (16) et ayant un plongeur (92) attelé par la tringle avec ladite mâchoire cependant que la tringle comprend un moyen de rappel (122) pour rappeler cette mâchoire (26) vers l'autre mâchoire (24) quand le plongeur est à une position résultant de l'excitation du solénoïde et un moyen (138; 202) de précontrainte du moyen de rappel pourla réduction de l'amplitude de mouvement du plongeur nécessaire à l'obtention entre les mâchoires de la force de maintien requise.

5. Appareil d'introduction selon la revendication 4 dans lequel le moyen de rappel est un premier ressort (122) et le moyen de précontrainte est un second ressort (138) agissant pour allonger le premier ressort.

6. Appareil d'introduction selon la revendication 4 dans lequel le moyen de rappel est un ressort (122) et le moyen de précontrainte comprend pour le ressort de rappel une douille cylindrique (202) qui tient ce ressort à l'état partiellement allongé.

7. Appareil d'introduction selon l'une quelconque des revendications précédentes dans lequel l'une au moins des mâchoires a un élément (160) à coefficient de frottement élevé logé dans un évidement de la surface de serrage de cette mâchoire.

FIG. 1

FIG. 1A

FIG. 1B

FIG. 2

EP 0 174 214 B1

FIG. 3

4

**FIG. 4** TIMING DIAGRAM (4,500 MACHINE CYCLES PER HOUR)

SOLENOID DRIVE

COMPARE OUTPUT

SOLENOID TIMING DISC OUTPUT

UP/DOWN COUNTER

178Hz CLOCK

64 TOOTH ENCODING DISC AT 4,500 M.C./HR.

15 MACHINE DEGREES DELAY AT 4,500 M.C./HR.

**FIG. 5** TIMING DIAGRAM (10,000 MACHINE CYCLES PER HOUR)

SOLENOID DRIVE

COMPARE OUTPUT

SOLENOID TIMING DISC OUTPUT

UP/DOWN COUNTER

178Hz CLOCK

64 TOOTH ENCODING DISC AT 10,000 M.C./HR.

7 MACHINE DEGREES DELAY AT 10,000 M.C./HR.

5.625 MACHINE DEGREES EQUAL 5.6ms AT 10,000 M.C./HR.

5

FIG. 6

FIG. 7

FIG. 8

FIG. 9

FIG. 10

FIG. 11